# EUROPÄISCHE PATENTSCHRIFT

(11) **EP 3 704 787 B1**
(45) Veröffentlichungstag und Bekanntmachung des Hinweises auf die Patenterteilung: **22.09.2021**
(21) Anmeldenummer: 18812030.7
(22) Anmeldetag: 25.10.2018
(51) Int. Cl.: H02K 15/04

(54) **VORRICHTUNG UND VERFAHREN ZUR BILDUNG EINES LEITERPAKETES**
APPARATUS AND METHOD FOR FORMING A CONDUCTOR PACKET
DISPOSITIF ET PROCÉDÉ POUR LA FORMATION D'UN PAQUET CONDUCTEUR

(30) Priorität: 30.10.2017 AT 509032017
(43) Veröffentlichungstag der Anmeldung: 09.09.2020
(73) Patentinhaber: Miba Automation Systems Ges.m.b.H., 4663 Laakirchen (AT)
(72) Erfinder: FALKNER, Andreas, 4600 Wels (AT); PRIMORAC, Mladen-Mateo, 3100 St. Pölten (AT); SCHERRER, David, 4812 Altmünster (AT)
(74) Vertreter: Burger, Hannes
(86) Internationale Anmeldenummer: PCT/AT2018/060260
(87) Internationale Veröffentlichungsnummer: WO 2019/084587

(56) Entgegenhaltungen:
- JP-A- 2003 134 751
- JP-A- 2004 072 839
- JP-B2- 3 973 592
- JP-B2- 3 975 891

## Beschreibung

Die Erfindung betrifft eine Vorrichtung und ein Verfahren zur Bildung eines zum Einfügen in einen Stator oder Rotor vorgesehenen Leiterpaketes.

Als wichtige funktionelle Bestandteile eines Elektromotors sind dessen Stator und/oder Rotor zumeist aus einer Vielzahl von elektrischen Leiterelementen gebildet, die in oder um einen elektromagnetisch erregbaren Kern angeordnet sind. Dabei sind die Leiterelemente derart angeordnet, dass z.B. in einem Stator eine Mehrzahl an Wicklungen gebildet wird, welche bei Stromdurchfluss die Erzeugung eines elektromagnetischen Feldes bewirken. Häufig werden in Statoren dazu U-förmige Leiterelemente eingesetzt und gemäß eines vorgegebenen Verschaltungsmusters elektrisch miteinander verbunden. Die korrekte Positionierung der oftmals unterschiedlich langen U-förmigen Leiterelemente im Statorpaket ist mit großem manuellen Aufwand verbunden, oder kann nur mittels komplizierter Anlagen bewerkstelligt werden.

Die DE 102014226224 A1 stellt hierzu ein Verfahren zum Formen U-förmiger Wickelelemente vor, wobei ein inneres und ein äußeres Werkzeugteil eines Schränkwerkzeugs gegeneinander verdreht werden und dabei die Wickelelemente von jeweils einem Zahn ergriffen werden und ein Stababschnitt des Wickelelements umgeformt wird.

Es wäre jedoch vorteilhaft die U-förmigen Leiterelemente in einer vorgebbaren Position anzuordnen und zu einem Leiterpaket zusammen zu fassen, bevor ein Einfügen in einen Stator oder Rotor erfolgt.

Eine Vorrichtung bzw. ein Verfahren zum Anordnen U-förmiger Wickelelemente ist in der JP 2004 072839 A offenbart. JP 2004 072839 offenbart ein Anordnen jeweils eines Schenkels von U-förmigen Leiterelementen in Löchern einer zylindrischen Einspannvorrichtung in einer Ausgangslage. JP 2004 072839 A beschreibt weiters eine Anordnung der jeweils zweiten Schenkel an einer äußeren Umfangfläche der zylindrischen Einspannvorrichtung in einer Endlage. Weiters ist beschrieben, dass auch mehrere umfänglich und radial beabstandet angeordn ete Lagen von Leiterelementen mittels mehrerer umfänglich gestapelt angeordneter Einspannvorrichtungen angeordnet werden können. In der JP 2004 072839 A ist jedoch keine konkrete Maßnahme oder Vorrichtung zur tatsächlichen Ausführung der Anordnung der Leiterelemente angegeben.

In der JP 3975891 B2 ist eine weitere Anordnungsvorrichtung und ein Verfahren zum Anordnen von U-förmigen Leiterelementen offenbart. Die Anordnungsvorrichtung umfasst ein rotierbares, ringförmiges Aufnahmepaket mit Nuten zur Aufnahme der inneren Schenkel der Leiterelemente. Die Anordnung der äußeren Schenkel der Leiterelemente wird durch Rotieren des Aufnahmepakets bewerkstelligt, wobei die äußeren Schenkel der Leiterelemente in einer bogenförmigen, radial nach innen verlaufenden Führungsaufnahme geführt werden.

In der JP 2003 134751 A ist ein ähnliches Anordnungsverfahren mit Führung der Schenkel von Leiterelementen in bogenförmigen Führungsschlitzen offenbart, wobei in diesem Falle innere und äußere Schenkel von Leiterelementen jeweils gemeinsam in einem Führungsschlitz aufgenommen sind. Ein konkretes Mittel zur Ausführung der Anordnung von den gezeigten Anfangszustand zu einem ebenfalls beschriebenen Endzustand ist auch in diesem Zusammenhang nicht angegeben. Außerdem offenbart die JP 2003 134751 A ein weiteres Verfahren, bei welchem Schenkel von Leiterelementen in ein biegbares Aufnahmemittel aufgenommen und die Leiterelemente anschließend durch Verbiegung des Aufnahmemittels in einer kreisförmigen Schlitzbahn angeordnet werden.

Die Aufgabe wird von der vorliegenden Erfindung, unter Überwindung der Nachteile des Standes der Technik, bewerkstelligt und eine Vorrichtung und ein Verfahren offenbart, mittels derer ein Benutzer in der Lage ist, auf eine einfache Weise die Bildung eines Leiterpaketes zum Einfügen in einen Rotor oder Stator vorzunehmen.

Das erfindungsgemäße Verfahren zur Bildung eines zum Einfügen in einen Stator oder Rotor vorgesehenen Leiterpaketes, umfasst die Schritte
- Bereitstellen einer Mehrzahl von im Wesentlichen U-förmigen Leiterelementen mit jeweils einem ersten Stababschnitt und einem ersten Leiterende und einem zweiten Stababschnitt und einem zweiten Leiterende, welche Stababschnitte durch einen im Wesentlichen bogenförmigen Verbindungsabschnitt verbunden sind,
- zumindest abschnittsweises Aufnehmen der ersten Stababschnitte in Aufnahmen, welche Aufnahmen, an einem Außenumfang einer inneren Haltevorrichtung ausgebildet sind,
- Vorpositionieren der zweiten Stababschnitte durch Verbringen eines jeweiligen zweiten Stababschnittes in die Nähe eines ersten Stababschnittes eines anderen Leiterelementes, mittels einer Positioniervorrichtung,
- und Greifen von jeweils aus einem vorpositionierten zweiten Stababschnitt und einem in Radialrichtung benachbarten, ersten Stababschnitt gebildeten Stababschnittspaaren durch in Radialrichtung zur inneren Haltevorrichtung geführte Greifelemente zumindest einer umfänglich um die innere Haltevorrichtung angeordneten Greifvorrichtung, wobei vor dem Vorpositionieren der zweiten Stababschnitte die ersten Stababschnitte zumindest abschnittsweise in den Aufnahmen drehbar aufgenommen werden und die zweiten Stababschnitte freistehend ringförmig um den Außenumfang der inneren Haltevorrichtung herum und in Radialrichtung nach außen von dem Außenumfang beabstandet angeordnet werden, und dass die zweiten Stababschnitte zum Vorpositionieren mittels eines in Umfangsrichtung, sowie gleichzeitig in Radialrichtung zum Außenumfang der inneren Haltevorrichtung , geführten Positionierelementes der Positioniervorrichtung gedrückt werden, wobei die Leiterelemente jeweils um eine erste Stablängsachse der zumindest abschnittsweise in den Aufnahmen drehbar aufgenommenen, ersten Stababschnitte gedreht werden.

Durch das erfindungsgemäße Verfahren wird auf relativ einfache Weise eine Vorpositionierung, also Ausrichtung, der U-förmigen Leiterelemente entsprechend eines vorgebbaren Verschaltungsmusters erreicht. Durch die erfindungsgemäße Führung des Positionierelements in Umfangsrichtung und gleichzeitiger Bewegung in Radialrichtung nach innen erfolgt eine relativ einfache Verdrehbewegung der Leiterelemente. Die ersten Stababschnitte werden im Zuge der Vorpositionierung durch die Verdrehbewegung, ohne nachteiliges Umformen der Leiterelemente, mit vorgesehenen zweiten Stababschnitten eines anderen Leiterelements in Radialrichtung direkt benachbart angeordnet, wodurch jeweils ein Stababschnittspaar gebildet wird. Somit entfällt ein etwaiger Schritt des Umformens des Leiterelements, was üblicherweise zu einer Querschnittsveränderung und somit einer Widerstandsänderung des Leiterelements führen würde. Das Anlegen bzw. Verdrehen der Leiterelemente durch das Positionierelement kann in einem oder auch mehreren Umläufen um die innere Haltevorrichtung erfolgen.

Die ersten Stababschnitte der Leiterelemente sind dabei nur abschnittsweise, also mit einem Längsteil des Stababschnitts in Berührung, wodurch lediglich geringe Reibungskräfte am Leiterelement auftreten. Dies ist von Vorteil da die Leiterelemente in der Regel mit einer Isolation versehen sind, welche bei der Positionierung der Stababschnitte zur Bildung der Stababschnittspaare, respektive des Leiterpaketes nicht beschädigt werden sollte.

Das beschriebene Vorpositionieren beschreibt somit die Bildung eines Leiterpaketes womit ein anschließender Greifvorgang des Leiterpaketes bzw. an daran anknüpfender Transfer und/oder Einfügevorgang des Leiterpaketes in einen Stator oder Rotor deutlich erleichtert wird.

Weiters kann es zweckmäßig sein, wenn während des Bereitstellens, des Aufnehmens und des Vorpositionierens die Leiterelemente durch jeweils einen Hebel, welcher um die erste Stablängsachse der jeweils ersten Stababschnitte drehbar ausgebildet ist, an dem ersten und zweiten Stababschnitt kontaktiert werden und die Hebel während des Vorpositionierens die zweiten Stababschnitte durch eine Einschwenkbewegung, analog der Andrückbewegung der zweiten Stababschnitte durch das Positionierelement, in Umfangs- und Radialrichtung führen.

Durch die Verwendung von Hebeln kann die Prozesssicherheit erhöht werden, da die zweiten Stababschnitte in Radialrichtung und/oder Umfangsrichtung geführt werden. Dies ist speziell bei relativ langen U-förmigen Leiterelementen vorteilhaft.

Ferner kann vorgesehen sein, dass während des Bereitstellens, des Aufnehmens und des Vorpositionierens die Leiterelemente durch jeweils eine Führungsnut zumindest einer Kulisse an dem zweiten Stababschnitt kontaktiert werden und die zweiten Stababschnitte während des Vorpositionierens der zweiten Stababschnitte durch das Positionierelement mittels der jeweiligen Führungsnut in Umfangs- und Radialrichtung geführt werden.

In ähnlicher Weise wie bei der Verwendung von Hebeln, kann durch die Führung der zweiten Stababschnitte innerhalb einer Führungsnut einer Kulisse eine sehr genaue Positionierung der zweiten Stababschnitte an den vorgesehenen ersten Stababschnitten vorgenommen werden.

Es ist denkbar, dass mehrere Kulissen in Axialrichtung übereinander angeordnet sind und somit in Axialrichtung eine Mehrpunktauflage der zweiten Stababschnitte bieten, was zu einer zusätzlichen Erhöhung der Sicherung der Leiterelemente gegen unbeabsichtigtes Verkippen führen kann. Diese Maßnahme ist besonders bei sehr langen Leiterelementen vorteilhaft. Analog dazu ist vorstellbar, dass sowohl Hebel und zumindest eine Kulisse, als auch eine Mehrzahl von in Axialrichtung übereinander angeordneten Hebeln verwendet werden.

Darüber hinaus kann vorgesehen sein, dass das Positionierelement durch ein rotierbar an der Positioniervorrichtung angeordnetes Rollenelement gebildet ist, und dass dieses Rollenelement während des Vorpositionierens der zweiten Stababschnitte an den zweiten Stababschnitten abrollt oder aktiv angetrieben an den zweiten Stababschnitten abgerollt wird.

Das Andrücken der zweiten Stababschnitte wird durch ein Abrollen auf eine materialschonende Weise bewerkstelligt, wodurch Beschädigungen der Leiterelemente bzw. deren Isolierung effizient vermieden werden kann. Das Heranfahren des Positionierelements zur inneren Haltevorrichtung kann innerhalb eines Umlaufs, oder auch mehrerer Umläufe, abgeschlossen werden. Das Andrücken, also Vorpositionieren, der zweiten Stababschnitte kann dadurch sehr präzise durchgeführt werden, was zu einer Erhöhung der Prozesssicherheit beitragen kann.

Vorteilhaft ist auch eine Verfahrensart, gemäß welcher vorgesehen sein kann, dass die Aufnahmen für die ersten Stababschnitte durch nach außen hin offene, in Axialrichtung verlaufende Aufnahmenuten gebildet sind, und dass die ersten Stababschnitte zumindest abschnittsweise in diese Aufnahmenuten aufgenommen werden, wobei während des Aufnehmens der ersten Stababschnitte und während des Vorpositionierens der zweiten Stababschnitte um die ersten Stababschnitte zumindest abschnittsweise eine Hülse angeordnet wird, welche Hülse die ersten Stababschnitte unmittelbar in Radialrichtung nach außen benachbart umgibt und während des Vorpositionierens die ersten Stababschnitte gegen Verschiebung in Radialrichtung nach außen sichert.

Die Hülse ist somit zeitweilig als Begrenzung der ersten Stababschnitte in Radialrichtung vorgesehen, wodurch eine Sicherung gegen Verkippen bzw. Verschiebung nach außen vermieden werden kann. Die Hülse kann dabei anliegend an die ersten Stababschnitte, oder auch durch einen kleinen Spalt davon getrennt, angeordnet sein um eine Drehbewegung der zweiten Stababschnitte nicht zu behindern. Die Hülse kann dabei vorteilhafterweise unterhalb der inneren Haltevorrichtung bzw. der Aufnahmen angeordnet sein.

Gemäß einer Weiterbildung ist es möglich, die zweiten Stababschnitte zum Vorpositionieren auf eine äußere Hülsenmantelfläche der Hülse angelegt werden. Dies kann beim Vorpositionieren vorteilhaft sein, da dabei die zweiten Stababschnitte somit in unmittelbarer Nähe zu den vorgesehenen ersten Stababschnitten positioniert werden aber noch keinen Kontakt haben. Mittels diesem Zwischenschritt können eventuell noch nicht korrekt ausgerichtete zweite Leiterabschnitte durch einen zusätzlichen Umlauf des Positionierelementes in Umfangsrichtung gegenüber den ersten Stabschnitten präzise ausgerichtet werden.

Ferner ist es zweckmäßig, dass nach dem Vorpositionieren der zweiten Stababschnitte die Hülse in Axialrichtung bezüglich der inneren Haltevorrichtung nach unten in einen Bereich der zweiten Leiterenden der zweiten Stabsabschnitte verstellt wird, und dass hiernach die zweiten Leiterenden der vorpositionierten, zweiten Stababschnitte mittels dem Positionierelement oder den Greifelementen der Greifvorrichtung in umfänglich in einem oberen Endbereich an der Hülse angeordnete, nach oben offene Positioniernuten gedrückt werden.

Es können durch das Verschieben der Hülse somit die zweiten Stababschnitte gegenüber den zugewiesenen ersten Stababschnitte in Radialrichtung freigegeben werden und an diese präzise angelegt werden. Die somit gebildeten Stababschnittspaare sind damit im Wesentlichen gleichmäßig in Umfangsrichtung verteilt. Die Nuten der Aufnahmen der inneren Haltevorrichtung können eine ausreichende Nuttiefe in Radialrichtung aufweisen um das Stababschnittspaar aufzunehmen, bzw. können die an der Hülse vorgesehenen Positioniernuten zumindest einen unteren Bereich der zweiten Leiterenden aufnehmen. Dadurch kann eine Verschiebung in Axial-, Radialer und Umfangsrichtung der gebildeten Leiterpaare effizient vermieden werden.

Darüber hinaus kann vorgesehen sein, dass die ersten Leiterenden der ersten Stababschnitte während des Vorpositionierens der Leiterelemente mittels einer Abstützvorrichtung mit zumindest einer Abstützfläche in Axialrichtung abgestützt werden.

Dadurch kann ein unbeabsichtigtes Herabrutschen der Leiterelemente in Axialrichtung besonders gut vermieden werden. Die Gefahr eines Verklemmens der Leiterelemente bei der Vorpositionierung wird dadurch ebenso reduziert.

Weiters kann vorgesehen sein, dass während des Vorpositionierens der zweiten Stababschnitte ein erster Stababschnitt zumindest eines der Leiterelemente mittels wenigstens einer höhenverstellbaren Abstützfläche der Abstützvorrichtung in einer gegenüber anderen Leiterelementen unterschiedlichen Höhe gelagert wird.

Die Abstützvorrichtung kann somit in Axialrichtung unterschiedliche Niveaus von Abstützflächen für die ersten Leiterenden ausbilden. Dies ist besonders bei unterschiedlich langen Leiterelementen von Vorteil, da diese unter Umständen zur Überbrückung verschieden langer Nutsprünge vorgesehen sein können. Damit ist es erforderlich, dass einzelne zweite Stababschnitte über eine größere oder kleinere Anzahl an Leiterelementen, hinweg gedreht werden müssen damit der zweite Stababschnitt mit einem ersten Stababschnitt eines vorgesehenen Leiterelements korrekt positioniert werden kann. Durch die Höhenverstellbarkeit zumindest einzelner Abstützflächen der Abstützvorrichtung in Axialrichtung kann somit ein Verklemmen der Leiterelemente während des Vorpositionierens vermieden werden.

Gemäß einer besonderen Ausprägung ist es möglich, dass im Bereich der ersten Leiterenden der ersten Stababschnitte ein Nutenring angeordnet wird, an dessen Nutenringumfang nach außen hin offene, vertikal verlaufende Halterungsnuten angeordnet sind, und dass ersten Leiterenden der ersten Stababschnitte vor dem Vorpositionieren der zweiten Stababschnitte in diese Halterungsnuten eingebracht werden.

Die Anordnung des Nutenrings liegt in Axialrichtung unterhalb der inneren Haltevorrichtung womit eine zusätzliche, zweite Auflagefläche für die ersten Stabschnitte geschaffen wird. Die ersten Stababschnitte können dadurch an zumindest zwei Punkten, zumindest abschnittsweise gegenüber einer Verkippung in Radialrichtung gesichert werden. Hierdurch wird eine erhöhte Prozessstabilität begünstigt.

Die erfindungsgemäße Vorpositioniervorrichtung zur Bildung eines zum Einfügen in einen Stator oder Rotor vorgesehenen Leiterpaketes, umfasst
- eine innere Haltevorrichtung mit entlang eines Außenumfangs der inneren Haltevorrichtung angeordneten und zur zumindest abschnittsweisen Aufnahme erster Stababschnitte mit ersten Leiterenden von im Wesentlichen U-förmigen Leiterelementen vorgesehenen Aufnahmen,
- eine Positioniervorrichtung zum Vorpositionieren von zweiten Stababschnitten mit zweiten Leiterenden der Leiterelemente, welche zweite Stababschnitte mit den ersten Stababschnitten durch einen im Wesentlichen bogenförmigen Verbindungsabschnitt verbunden sind,
- zumindest eine um die innere Haltevorrichtung in Umfangsrichtung anordenbare Greifvorrichtung mit in Radialrichtung zur inneren Haltevorrichtung verstellbaren Greifelementen, welche zum Greifen von jeweils aus einem vorpositionierten zweiten Stababschnitt und einem benachbarten, ersten Stababschnitt gebildeten Stababschnittspaaren ausgebildet ist. Die erfindungsgemäße Vorpositionierungsvorrichtung zeichnet sich dadurch aus
- dass die Aufnahmen derart dimensioniert sind, dass die ersten Stababschnitte zumindest abschnittsweise in den Aufnahmen drehbar aufnehmbar sind,
- und dass die Positioniervorrichtung zum Vorpositionieren der zweiten Stababschnitte ein von der inneren Haltevorrichtung in Radialrichtung nach außen beabstandetes Positionierelement umfasst, welches Positionierelement in Umfangsrichtung der inneren Haltevorrichtung umlaufend antreibbar und gleichzeitig radial nach innen verstellbar ausgebildet ist.

Mittels der erfindungsgemäßen Vorpositioniervorrichtung können die oben beschriebenen Verfahrensschritte auf relativ einfache Weise durchgeführt werden. Durch die beschriebene Bauweise und Anordnung der einzelnen Bauteile bzw. Teilvorrichtungen wird es möglich eine Vielzahl von Leiterelementen gemäß einem vorgebbaren Verschaltungsmuster zu derart zu positionieren, dass ein Leiterpaket gebildet wird. Dadurch wird es möglich mit geringem Kostenaufwand eine vergleichsweise schnelle und präzise Vorpositionierung der Leiterelemente zu bewerkstelligen, was vor allem bei hohen Stückzahlen von Bedeutung ist.

Die Aufnahmen weisen in Axialrichtung zumindest eine Längserstreckung auf, welche eine Kontaktierung der ersten Stababschnitte zumindest abschnittsweise ermöglicht, wodurch eine Verkippung während des Vorpositionierens reduziert werden kann. Die als in Umfangsrichtung antreibbare, sowie in Radialrichtung nach innen verstellbare, Ausgestaltung des Positionierelements der Positioniervorrichtung weist den Vorteil auf, dass die zweiten Stababschnitte mittels einer oder mehrerer Umlaufbewegungen des Positionierelements gegenüber dafür vorgesehenen ersten Stababschnitten einfach ausgerichtet werden können.

Die Positioniervorrichtung und/oder die Greifvorrichtung können dabei in axialer Richtung verschiebbar ausgebildet sein um eine sequenzielle Abfolge der Verfahrensschritte zu gewährleisten. Die Greifelemente können dabei segmentiert und gegenüber der inneren Haltevorrichtung in Radialrichtung verstell- bzw. verschiebbar ausgebildet sein. Hierdurch kann nach dem Vorpositionieren auf einfache Weise eine zeitweilige Fixierung des Leiterpakets vorgenommen werden, wonach ein Transfer zu einer Einfügestation oder etwaige danach folgende Verfahrensschritte durchgeführt werden können, worauf hier allerdings nicht im Detail eingegangen wird.

Weiters kann es zweckmäßig sein, wenn eine Hebelführungsvorrichtung mit einer, der Anzahl der Leiterelemente entsprechenden, Anzahl an Hebeln ausgebildet ist, wobei die Hebel bügelförmig mit einer vorbestimmbare Hebellänge und zwei horizontal erstreckten, in die gleiche Richtung weisenden, Hebelarmen ausgebildet sind, wobei der erste Hebelarm jeweils eine zum ersten Stababschnitt des Leiterelements formkompatible erste Stababschnittaufnahme aufweist, und wobei der zweite Hebelarm jeweils eine zum zweiten Stababschnitt des Leiterelements formkompatible zweite Stababschnittaufnahme aufweist, und die Hebel um eine jeweils eine erste Stababschnittsaufnahmeachse, welche mit einer ersten Stablängsachse der jeweils ersten Stababschnitte fluchtend, drehbar gelagert sind und wobei die Hebel in Umfangsrichtung verteilt und in Axialrichtung derart versetzt angeordnet sind, dass alle Hebel in Umfangsrichtung einschwenkbar sind.

Die Ausgestaltung der Hebelführungsvorrichtung kann auf unterschiedliche Arten erfolgen, wobei lediglich die Schwenkbewegung der Hebel in Umfangsrichtung frei erfolgen können muss. Durch die Ausbildung der Hebel mit jeweiligen Stababschnittsaufnahmen für die ersten und zweiten Stababschnitte, kann eine zeitweilige Führung der Leiterelemente während des Vorpositionierens gewährleistet werden. Hierdurch wird eine präzise Ausrichtung der zweiten Stababschnitte gegenüber dafür vorgesehenen ersten Stababschnitten begünstigt und ein Verkippen der Leiterelemente vermieden.

Ferner kann vorgesehen sein, eine Kulisse mit einer, der Anzahl der Leiterelemente entsprechenden, Anzahl an Führungsnuten ausgebildet ist,
wobei die Führungsnuten von einem, der inneren Haltevorrichtung zugewandten Innendurchmesser ausgehend, als, die Kulisse in Axialrichtung durchdringende Öffnungen, sowie in Umfangs- und Radialrichtung kreisbogenförmig ausgebildet sind.

Hierdurch kann die Führung der zweiten Stababschnitte während des Vorpositionierens begünstigt werden. Die Kulisse kann als Kulissenscheibe ausgebildet sein eine eigenständige oder kombinierte Führung mit der oben beschriebenen Hebelführungsvorrichtung für die zweiten Leiterabschnitte darstellen. Die Kulisse kann zudem in Axialrichtung verschiebbar und/oder in Umfangsrichtung drehbar sein. Dies kann die Ausrichtung der Kulisse gegenüber der inneren Haltevorrichtung erleichtert und die Bereitstellung der Leiterelemente an bzw. in der inneren Haltevorrichtung vereinfachen.

Darüber hinaus kann vorgesehen sein, dass das Positionierelement durch ein rotierbar an der Positioniervorrichtung angeordnetes Rollenelement gebildet ist, wobei dieses Rollenelement antriebslos rotierbar gelagert ist oder mit einem Antriebsorgan zur aktiv angetriebenen Rotation wirkverbunden ist.

Es ist denkbar, dass das Positionierelement als Keil, Rolle oder vergleichbares Andrückelement ausgebildet ist. In jedem Fall kann die Vorpositionierung der zweiten Stababschnitte durch ein Abrollen bzw. Andrücken in Radial- und Umfangsrichtung auf eine materialschonende Weise bewerkstelligt werden, wodurch Beschädigungen der Leiterelemente bzw. deren Isolierung effizient vermieden werden kann. Als Antriebsorgan kommen beispielsweise Elektromotoren in Frage.

Vorteilhaft ist auch eine Ausprägung, gemäß welcher vorgesehen sein kann, dass die Aufnahmen für die ersten Stababschnitte durch nach außen hin offene, in Axialrichtung verlaufende Aufnahmenuten gebildet sind, und dass eine Hülse ausgebildet ist, welche unterhalb der Aufnahmenuten angeordnet ist, wobei ein Hülseninnendurchmesser der Hülse derart gewählt ist, dass die Hülse für die ersten Stababschnitte in Radialrichtung nach außen eine Begrenzung bildet.

Die Hülse kann hierbei in Axialrichtung verschiebbar ausgebildet sein und somit nur zeitweilig als Anschlag in Radialrichtung für die ersten Stababschnitte dienen. Hierdurch wird ein Verkippen der Leiterelemente vermieden wodurch die Prozesssicherheit gesteigert werden kann. Die Hülse weist ferner eine radial äußere Anlegefläche auf, welche zum zeitweiligen Anlegen der zweiten Stababschnitte genutzt werden kann. Es wird somit ermöglicht, dass während des Vorpositionierens die zweiten Stababschnitte zuerst an diese Anlegefläche herangelegt werden, bevor die Hülse verschoben wird und die zweiten Stababschnitte an die zugeordneten ersten Stababschnitte herangelegt werden können. Die Genauigkeit des Vorpositioniervorgangs kann hiermit erhöht werden.

Ferner kann es zweckmäßig sein, wenn die Hülse und in einem oberen Endbereich in Umfangsrichtung angeordnete, nach oben offene Positioniernuten aufweist, welche Positioniernuten zur Aufnahme der zweiten Leiterenden der zweiten Stababschnitte ausgebildet sind.

Die Positioniernuten können dabei bevorzugt horizontal verlaufen und von einem Stirnende der Hülse ausgehen. Die Tiefe der Positioniernuten kann derart gewählt werden, dass eine Aufnahme der zweiten Leiterenden, zumindest abschnittsweise, erfolgen kann. Die Hülse sollte dabei in Axialrichtung verschiebbar ausgebildet sein. Das Hineindrücken der zweiten Leiterenden in die dafür vorgesehenen Positioniernuten kann durch einen zusätzlichen Umlauf des Positionierelements, oder auch durch die Greifvorrichtung erfolgen.

Darüber hinaus kann vorgesehen sein, dass ein Führungselement mit Positioniernuten ausgebildet ist, welche Positioniernuten zur Aufnahme der zweiten Leiterenden der zweiten Stababschnitte ausgebildet sind.

Diese Ausführungsvariante kann alternativ zu einer in Axialrichtung verschiebbaren Hülse erfolgen, um eine zeitweilige Führung der zweiten Leiterenden in Axial-, Umfangs und/oder Radialrichtung zu ermöglichen.

Weiters kann vorgesehen sein, dass eine Abstützvorrichtung mit zumindest einer Abstützfläche ausgebildet ist, welche Abstützvorrichtung zum axialen Abstützen der ersten Stababschnitte vorgesehen ist.

Die Abstützvorrichtung erlaubt während des Bereitstellens, der Vorpositionierung und/oder des Greifens der Leiterelemente eine korrekte Positionierung der Leiterelemente in Axialrichtung. Hiermit kann ein unbeabsichtigtes Herabrutschen einzelner Leiterelemente in Axialrichtung effizient vermieden werden.

Gemäß einer besonderen Ausprägung ist es möglich, dass die Abstützvorrichtung wenigstens eine höhenverstellbare Abstützfläche aufweist.

Die Abstützvorrichtung kann aus z.B. mehreren ring- oder scheibenförmigen Elementen aufgebaut sein, welche in Axialrichtung als Anschlag für die ersten Leiterenden dienen. Die Abstützvorrichtung kann daher segmentiert aufgebaut sein, wobei sie aus zumindest zwei in Radialrichtung den gleichen Radius aufweisende Ringe oder Scheiben bestehen kann. Zumindest einer dieser Ringe ist zusätzlich in Umfangsrichtung an dafür vorgesehenen Positionen in Axialrichtung durchbrochen, während zumindest einer dieser Ringe oder Scheiben in Axialrichtung Fortsätze aufweisen kann. Durch einen derartigen Aufbau der Abstützvorrichtung wird ermöglicht, dass den unterschiedlich langen Leiterelementen an dafür in Umfangsrichtung vorgesehenen Positionen zugeordnete Abstützflächen in Axialrichtung bereitgestellt werden. Zumindest einzelne Abstützflächen der Abstützvorrichtung sind somit in Axialrichtung verschiebbar, wodurch lediglich auswählbare Leiterelemente in Axialrichtung verschoben werden kann. Dies bietet den Vorteil, dass für die notwendige Verdrehung der zweiten Stababschnitte zur korrekten Vorpositionierung gegenüber dafür vorgesehenen ersten Stababschnitten die Verdrehbewegung in Umfangsrichtung ermöglicht wird, ohne dass benachbarte Leiterelemente miteinander kollidieren. Dies ist besonders bei einer unterschiedlichen Anzahl von Nutsprüngen, also wenn einzelne Leiterelemente entsprechend dem Verschaltungsmuster gegenüber in Umfangsrichtung benachbarten Leiterelementen kürzere oder längere Distanzen zu überbrücken vorgesehen sind, von Nutzen.

Entsprechend einer vorteilhaften Weiterbildung kann vorgesehen sein, ein Nutenring ausgebildet ist, an dessen Nutenringumfang nach außen hin offene, vertikal verlaufende Halterungsnuten angeordnet sind, welche Halterungsnuten zur zumindest abschnittsweisen Aufnahme der ersten Leiterenden der ersten Stababschnitte ausgebildet sind.

Der Nutenring kann dabei als Anschlag für die ersten Stababschnitte in Radialrichtung nach innen dienen. Der Nutenring stellt damit zumindest abschnittsweise eine zweite Auflagefläche für die ersten Stababschnitte bereit. Hierdurch wird auf einfache Weise ein Verkippen der Leiterelemente aus ihrer vertikalen Ausrichtung entlang der Axialrichtung vermeidbar.

Zum besseren Verständnis der Erfindung wird diese anhand der nachfolgenden Figuren näher erläutert.

Es zeigen jeweils in stark vereinfachter, schematischer Darstellung:
- Fig. 1: Ausführungsbeispiel einer Vorpositionierungsvorrichtung;
- Fig. 2: Beispiele unterschiedlich ausgeführter Leiterelemente;
- Fig. 3: Ausschnitt eines Ausführungsbeispiels einer Vorpositioniervorrichtung mit einer Mehrzahl von Hebeln (a); Beispiel eines Hebels (b); vergrößerter Ausschnitt eines Ausführungsbeispiels bei dem die Hebel nach dem Vorpositionieren in Umfangsrichtung eingeschwenkt wurden:
- Fig. 4: Ausschnitt eines Ausführungsbeispiels einer Vorpositioniervorrichtung mit einer Kulisse und einer Mehrzahl an Führungsnuten (a); vergrößerter Ausschnitt einer Kulisse mit vorpositionierten zweiten Stababschnitten;
- Fig. 5: Ausschnitt eines Ausführungsbeispiels einer Vorpositioniervorrichtung mit einer Hülse in einer oberen bzw. unteren Position, sowie einem Nutenring;
- Fig. 6: Ausschnitt eines Ausführungsbeispiels einer Vorpositioniervorrichtung mit einer Abstützvorrichtung;
- Fig. 7: Ausführungsbeispiel einer Vorpositionierungsvorrichtung mit schwenkbarer Positioniervorrichtung bzw. Greifvorrichtung (a), bzw. mit verschiebbarer inneren Haltevorrichtung (b).

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

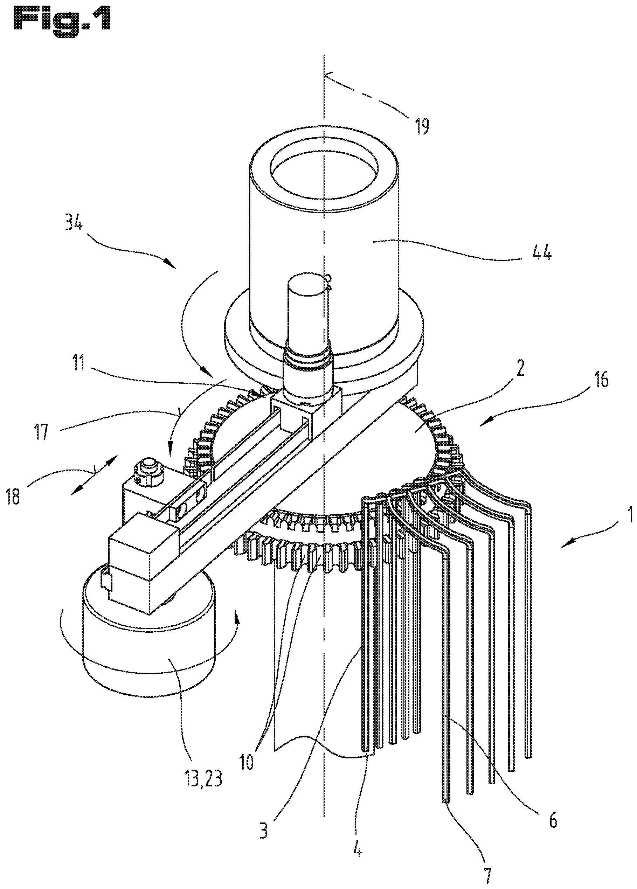

Ein Ausführungsbeispiel der erfindungsgemäßen Vorpositioniervorrichtung 34 ist in Fig. 1 dargestellt. Die Haltevorrichtung 2 weist eine vertikale Hauptachse auf welche als Bezugsachse dient. Die Axialrichtung 19 verläuft parallel zur vertikalen Hauptachse der inneren Haltevorrichtung 2. Die Haltevorrichtung 2 weist einen äußeren Außenumfang 16 auf, an welchem eine Mehrzahl von Aufnahmen 10 ersichtlich sind. Die Aufnahmen 10, können als geschlossene Aufnahmen 10 oder auch als, wie in Fig. 1 dargestellte, Aufnahmenuten 11 ausgeführt sein, in welche die ersten Stababschnitte 3 zumindest teilweise aufgenommen werden können. Zur Vereinfachung der Darstellung sind nur fünf Leiterelemente 1 dargestellt.

Weiters ist in Fig. 1 eine Positioniervorrichtung 12 dargestellt, welche im Ausführungsbeispiel oberhalb der inneren Haltevorrichtung 2 angeordnet ist. Die Positioniervorrichtung 12 umfasst dabei ein Positionierelement 13, welches in Radialrichtung 18 verschiebbar bzw. verfahrbar, sowie in Umfangsrichtung 17 rotierbar ausgebildet ist. Das Positionierelement 13 kann weiters als z.B. Rollenelement 23 ausgebildet sein, welches zusätzlich wie in Fig. 1 dargestellt um eine vertikale Rollenachse rotierbar ist. Die Positioniervorrichtung 12 kann ferner ein Antriebsorgan 44 aufweisen, welches zum Antrieb der Positioniervorrichtung 12 und/oder des Positionierelements 13 vorgesehen sein kann. Es ist auch möglich, zusätzliche Antriebsorgane 44 an der Positioniervorrichtung 11, dem Positionierelement 13, aber auch der Haltevorrichtung 2 angebracht sein können um beispielsweise die Verschiebung des Positionierelements 13, oder der Positioniervorrichtung 12, relativ zur inneren Haltevorrichtung 2 zu bewerkstelligen.

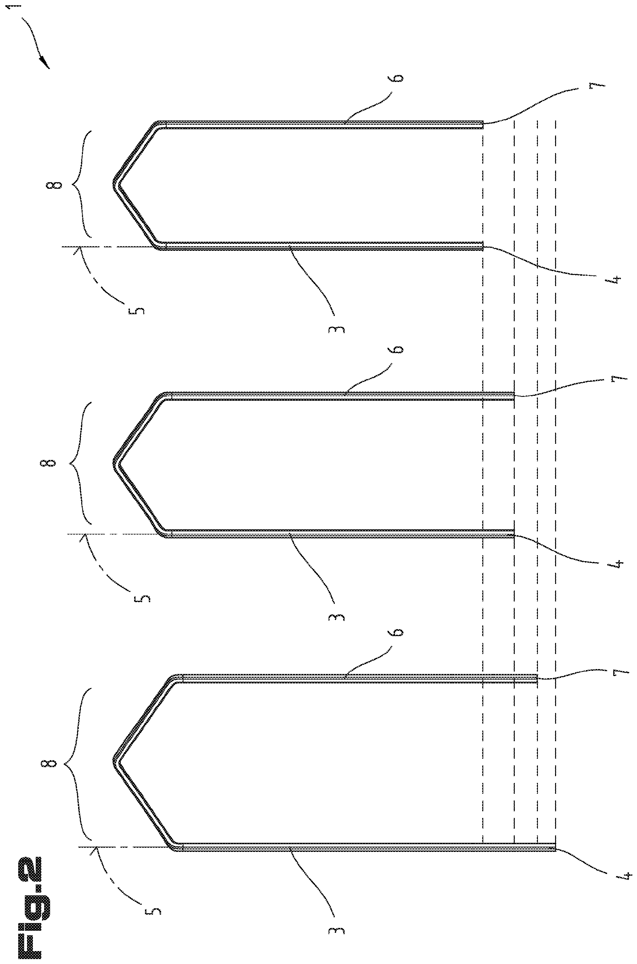

In Fig. 1 und insbesondere Fig. 2 sind bespielhaft einige Leiterelemente 1 ersichtlich. Die ersten und zweiten Stababschnitte 3, 6 eines Leiterelements 1 sind über einen im Wesentlichen bogenförmigen Verbindungsabschnitt 8 verbunden und weisen ein erstes 4, bzw. zweites Leiterende 7 auf. Diese Verbindungsabschnitte 8, wie auch die ersten und zweiten Stababschnitte 3, 6 können je nach vorgesehener Anordnung und somit der zu überbrückenden Distanz im zu bildenden Leiterpaket unterschiedlich lange ausgebildet sein. Wie in Fig. 2 gezeigt, können Leiterelemente 1 mit unterschiedlich langen ersten bzw. zweiten Stababschnitten 3, 6 Verwendung finden. Weiters ist für den ersten Stababschnitt 3 eine erste Stablängsachse 5 ersichtlich, um welche bei der Vorpositionierung eine Drehbewegung des zweiten Stababschnitts 6 erfolgt.

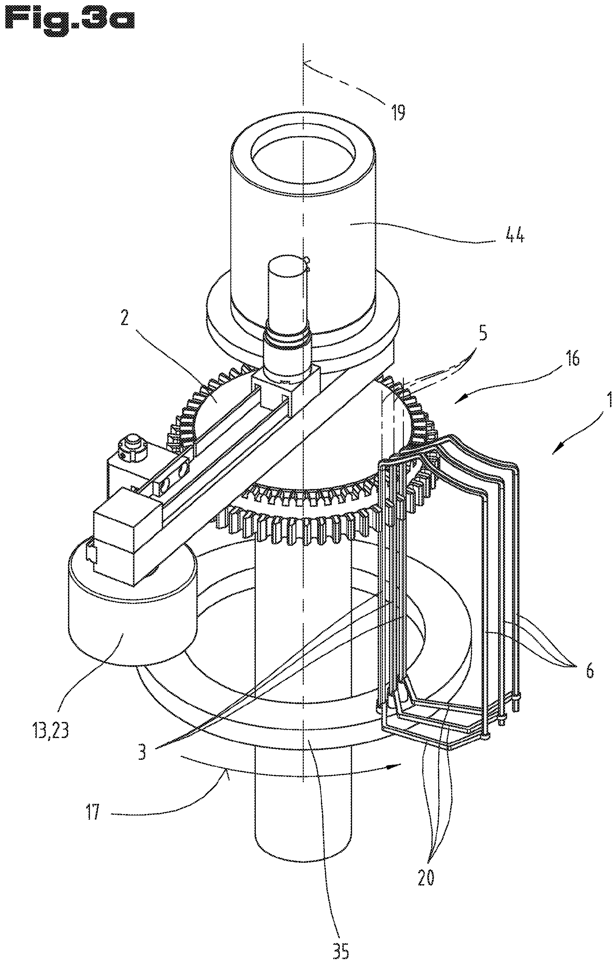

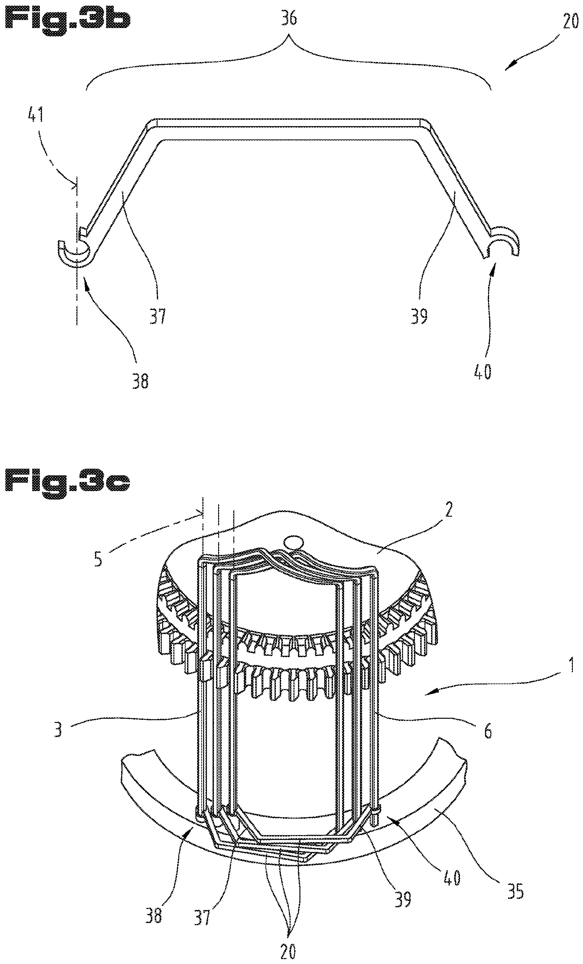

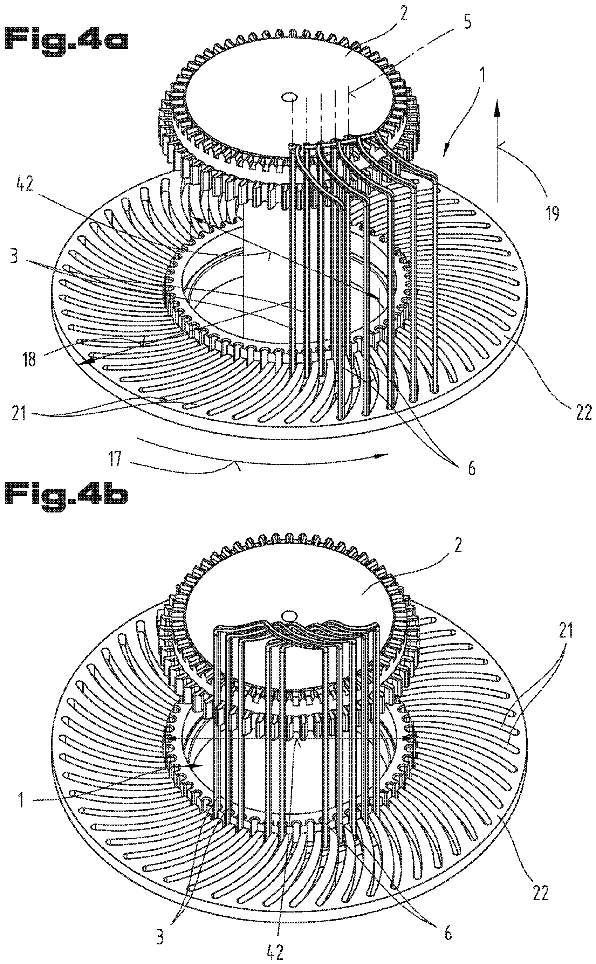

Für den Vorgang des Vorpositionierens können als eine Art Einrichthilfe verschiedene unterstützende Elemente zum Einsatz kommen. In den Fig. 3 und Fig. 4 sind beispielhaft die Verwendung einer Hebelführungsvorrichtung 35 bzw. einer Kulisse 22 gezeigt.

Die Hebelführungsvorrichtung 35 in Fig. 3a umfasst eine der Anzahl der Leiterelemente 1 entsprechende Anzahl an Hebeln 20, welche jeweils mit dem ersten und zweiten Stababschnitt 3, 6 eines Leiterelements 1 koppelbar ausgeführt sind. Ein derartiger Hebel 20 ist schematisch in Fig. 3b dargestellt. Jeder Hebel 20 weist zumindest eine erste Stababschnittaufnahme 38 auf, welche der zeitweiligen Verbindung mit zumindest einem Abschnitt eines ersten Stababschnittes 3 zugedacht ist. Die erste Stababschnittaufnahme 38 weist eine erster Stababschnittsaufnahmeachse 41 auf welche entlang der Aufnahmeöffnung verläuft und somit normal auf die Längserstreckung des Hebels 20 orientiert ist. Diese Stababschnittsaufnahmeachse 41 fällt in der Verwendung der Hebel 20 mit der ersten Stablängsachse 5 der Leiterelemente 1 während des Vorpositionierens zusammen. Es wird also eine gemeinsame Drehachse ausgebildet, um welche der jeweils zweite Stababschnitt 6 gedreht wird. Jeder Hebel 20 weist ferner einen ersten Hebelarm 37, bzw. zweiten Hebelarm 39, auf, wobei die beiden Hebelarme 37, 39 über Verbindungsstrecke miteinander verbunden sind. Die gesamte Länge eines Hebels 20 kann der vorgegebenen Position des Leiterelements 1, und somit mit der Länge des Verbindungsabschnitts 8 der zugedachten Leiterelemente 1, entsprechen und wird dementsprechend vom Fachmann ausgewählt. Die Hebel 20 in Fig. 3 a-c weisen weiters eine zweite Stababschnittaufnahme 40 auf, welche zur zeitweiligen Aufnahme und vor allem Führung der zweiten Stababschnitte 6 vorgesehen sind.

Der Zustand vor dem Vorpositionieren ist sinnbildlich in Fig. 3a dargestellt. Die bereitgestellten Leiterelemente 1 sind dabei in der inneren Haltevorrichtung 2 mit ihren ersten Stababschnitten 3 angeordnet. Die Hebel 20 sind in der dargestellten Form relativ nahe an den jeweiligen Leiterenden 4, 7 positioniert. Die Hebel 20 können entlang der Stablängsachse 5 in Axialrichtung 19 auch an anderen Positionen, bevorzugt zueinander versetzt, angeordnet sein. Es sollte jedoch eine Kollision der Hebel 20 während des Vorpositionierens vermieden werden. Eine einfache Variante ist in Fig. 3a dargestellt, worin die Hebelführungsvorrichtung 35 z.B. als Scheibe mit drehbar gelagerten Distanzhülsen zu den einzelnen Hebeln 20 dargestellt sind. Die Anordnung der Hebel 20 kann vom Fachmann natürlich auch in einer anderen Weise durchgeführt werden, oder sogar unterschiedlich geformte Verbindungsabschnitte der einzelnen Hebel 20 verwendet werden. Entscheidend ist eine Schwenk- bzw. Drehbewegung der Hebel 20, respektive der Leiterelemente 1, ungehindert in Umfangsrichtung 17 zu ermöglichen um die zweiten Stababschnitte 6 an den vorgesehenen ersten Stababschnitten 3 eines anderen Leiterelements 1 zu positionieren. Ein dadurch erreichbarer Endzustand nach dem Vorpositionieren kann in Fig. 3c ersehen werden. Es ist dem Fachmann klar verständlich, dass die Hebel 20 dabei eine Führung der zweiten Stababschnitte 6 gewährleisten, wodurch eine exakte Positionierung erfolgen kann. Danach folgende Greif-, Transfer- und/oder Einfügeprozessschritte werden hier nicht weiter im Detail erläutert.

Analog zu Fig. 3a und Fig. 3c kann aus Fig. 4a und Fig. 4b die Verwendung einer Kulisse 22 mit Führungsnuten 21 ersehen werden. Wiederum werden zu einfacheren Darstellung lediglich einige Leiterelemente 1 dargestellt. Fig. 4a stellt den Zustand vor dem Vorpositionieren dar, in welchem die Bereitstellung der Leiterelemente 1 erkannt werden kann. Durch die Drehbewegung der Positioniervorrichtung 12 während des Vorpositionierens, werden die zweiten Stababschnitte 6 entlang der Führungsnuten 21 zu ihren vorgesehenen ersten Stababschnitten 3 eines anderen Leiterelements 1 gedreht. Wie in Fig. 4a und Fig. 4b dargestellt, sind die Führungsnuten 21 der Kulisse 22 als in Axialrichtung durchgehend erstreckte Öffnungen ausgebildet, welche sich von einem der inneren Haltevorrichtung 2 zugewandten Innendurchmesser 42 in Umfangs- 17 und Radialrichtung 18 kreisbogenförmig ausgebildet. In Fig. 4b ist eine vorläufige Endposition nach der Vorpositionierung der zweiten Stababschnitte 6 dargestellt.

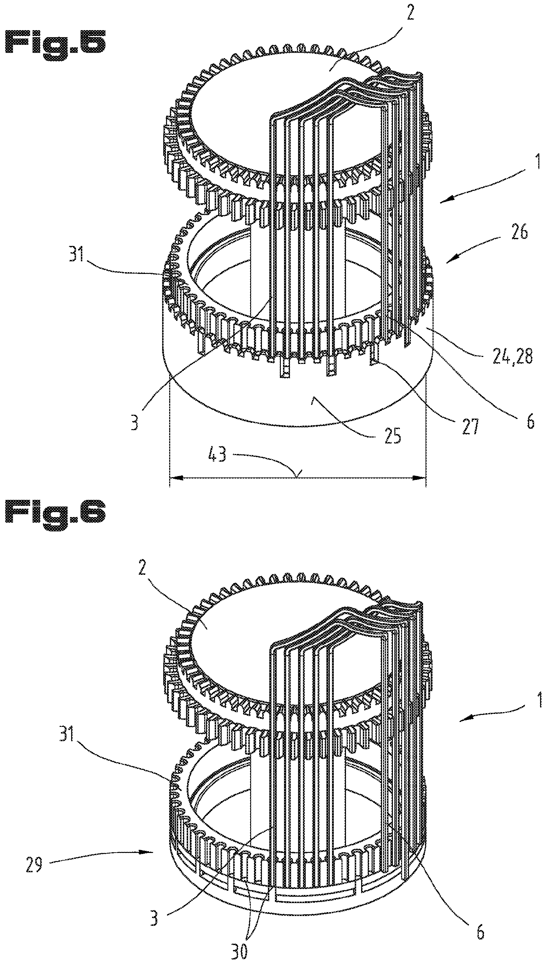

In Fig. 5 ist beispielhaft eine innere Haltevorrichtung 2 mit einigen Leiterelementen 1 dargestellt. Weiters ist eine Hülse 24 ersichtlich, welche in Axialrichtung 19 zumindest bis zu einer oberen Position, welche einem bündigen Abschluss des oberen Endbereichs 26 der Hülse 24 mit der Oberseite der inneren Haltevorrichtung 2 entspricht, verschiebbar ausgebildet ist. Der Hülseninnendurchmesser 43 kann derart gewählt werden, dass die ersten Stababschnitte 3 in Radialrichtung 18 durch die Hülse 24 am Herausfallen gehindert werden. Dadurch können während des Vorpositionierens, also der Einschwenkbewegung der zweiten Stababschnitte 6 in Umfangs- 17 und Radialrichtung 18 zu den ersten Stababschnitten 3, die zweiten Stababschnitte 6 beispielsweise an die Hülsenmantelfläche 25 der Hülse 24 angelegt werden. In der gewählten Darstellung in Fig. 5 befindet sich die Hülse 24 in einer unteren Position, wodurch die zweiten Stababschnitte 6 frei beweglich und somit bündig an die ersten Stababschnitte 3 anlegbar sind. Wie in Fig. 5 weiter zu ersehen kann die Hülse 24 im oberen Endbereich 26 in Radialrichtung 18 nach außen verlaufende und in Axialrichtung 19 nach oben offene Positioniernuten 27 aufweist. Diese Positioniernuten 27 können der Aufnahme der zweiten Leiterenden 7 der zweiten Stababschnitte 6 dienen können daher entsprechend der individuellen Länge der zweiten Stababschnitte 6 unterschiedliche Nuttiefen in Axialrichtung 19 aufweisen.

Ferner sind in den Fig. 5 und Fig. 6 beispielhaft Ausführungsformen gezeigt, welche einen Nutenring 31 mit einem Nutenringumfang 32 aufweisen. Am Nutenring 31 sind in Radialrichtung 18 nach außen offene, vertikal verlaufende Halterungsnuten 33 angeordnet. Der Nutenring 31 kann, zur zumindest zeitweisen Stützung der ersten Stababschnitte 3 in den Halterungsnuten 33, in Axialrichtung 19 verschiebbar ausgebildet sein und ist dabei bevorzugt im Bereich der ersten Leiterenden 4 angeordnet.

Alternativ zu einer in Fig. 5 verschiebbar ausgebildeten Hülse 24 kann ein Führungselement 28 mit Positioniernuten 27 vorgesehen sein. Die Positioniernuten 27 dienen analog zu den Positioniernuten 27 der Hülse 24 zur Aufnahme der zweiten Leiterenden 7 der zweiten Stababschnitte 6, um eine zeitweilige Führung der zweiten Leiterenden 7 in Axial- 19, Umfangs- 17, und/oder Radialrichtung 18 zu ermöglichen. Auf die getrennte Darstellung eines derartigen Führungselements 28 wird daher an dieser Stelle verzichtet und auf Fig. 5 verwiesen.

In Fig. 6 ist ein Ausführungsbeispiel gezeigt, welches eine Abstützvorrichtung 29 mit einer Mehrzahl an Abstützflächen 30 zeigt, welche horizontal ausgebildet sind. Diese Abstützflächen 30 dienen der Abstützung der ersten Stababschnitte 3 in Axialrichtung 19. Die dargestellte Abstützvorrichtung 29 umfasst ein in Umfangsrichtung 17 mehrfach unterteiltes Scheibenelement, welches in Axialrichtung 19 als Anschlag für die ersten Leiterenden 4 dient. Dieses Scheibenelement ist ferner in Umfangsrichtung 17 an dafür vorgesehenen Positionen in Axialrichtung 19 durchbrochen, und an diesen Positionen sind Fortsätze eines in Axialrichtung 19 darunter angeordneten weiteren Scheibenelements ersichtlich. Hierdurch werden in der beispielhaften Darstellung alle ersten Leiterenden 4 auf gleicher vertikaler Position zeitweilig gehalten. Der Aufbau der Abstützvorrichtung 29 kann somit entsprechend angepasst sein, dass unterschiedlich langen Leiterelementen 1 an dafür in Umfangsrichtung 17 vorgesehenen Positionen zugeordnete Abstützflächen 30 in Axialrichtung 19 bereitgestellt werden. Dabei ist ein Abstand der beiden in Fig. 6 dargestellten Scheibenelemente der Abstützvorrichtung 29 ersichtlich, welcher bei Verschiebung eines der beiden Scheibenelemente in Axialrichtung 19 zueinander reduziert werden kann, wodurch zumindest einzelne Abstützflächen 30 der Abstützvorrichtung 29 in Axialrichtung 19 verschiebbar sind. Hierdurch können lediglich auswählbare Leiterelemente 1 in Axialrichtung verschoben bzw. angehoben werden. Die in Fig. 6 gezeigten zweiten Stababschnitte 6 sind zur korrekten Vorpositionierung gegenüber dafür vorgesehenen ersten Stababschnitten 3 in Umfangsrichtung 17 verdreht worden, ohne dass benachbarte Leiterelemente 1 miteinander kollidierten. Die Überbrückung unterschiedlicher Distanzen durch die jeweiligen Leiterelemente 1 zur entsprechend dem Verschaltungsmuster korrekten Positionierung kann in Fig. 5 und Fig. 6 am Beispiel des "längeren" Leiterelements" gut nachvollzogen werden. Nach dem Vorpositionieren kann die höhenverstellbare Abstützfläche 30 der Fortsätze des unteren Scheibenelementes wieder zum Beispiel auf die gleiche Höhenposition der anderen Abstützflächen 30 des oberen Scheibenelements abgesenkt werden.

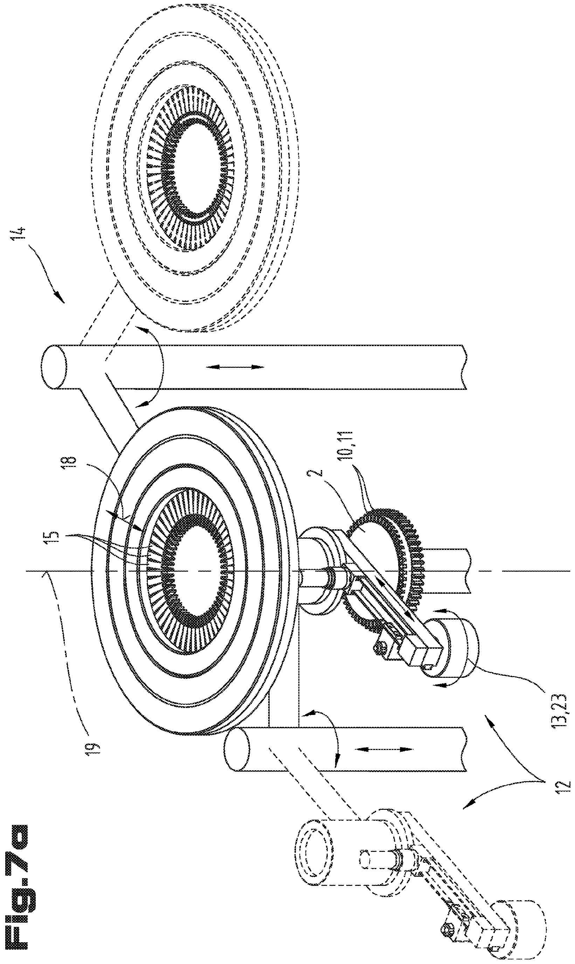

Entsprechend der vorliegenden Erfindung ist es denkbar, dass sowohl die Positioniervorrichtung 12, als auch die Greifvorrichtung 14 schwenk- bzw. drehbar ausgeführt sein können, wie schematisch in Fig. 7a dargestellt. Die Positioniervorrichtung 12 und/oder die Greifvorrichtung 14 sind dabei vorteilhafterweise in Axialrichtung 19 verschiebbar ausgebildet.

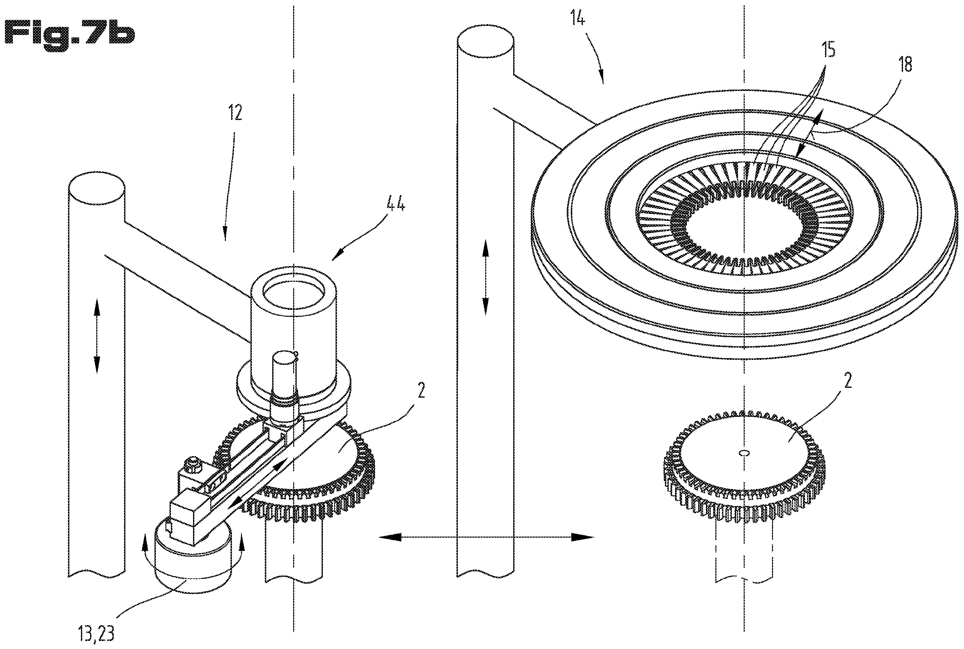

Ferner ist eine alternative Anordnung der Positioniervorrichtung 12, als auch der Greifvorrichtung 14 denkbar, wonach die innere Haltevorrichtung 2 gegenüber stationär angeordneten Positioniervorrichtung 12 und Greifvorrichtung 14 verschiebbar und/oder höhenverstellbar ausgebildet ist. Eine solche beispielhafte Ausführungsvariante ist in Fig. 7b dargestellt. Die Grundfunktionen und Bewegungsmöglichkeiten der Vorpositioniervorrichtung 34 bleiben dabei von der Anordnung der einzelnen Teilvorrichtung unbeeinflusst.

Wie in den Fig. 7a und Fig. 7b dargestellt, kann die Greifvorrichtung 14 in Radialrichtung 18 verschiebbare Greifelemente 15 aufweisen. Die Greifelemente 15 sind dabei dahingehend ausgebildet, dass sie die Leiterelemente 1 nach dem Vorpositionieren zumindest zeitweilig fixieren können und somit die eingestellte Position der ersten und zweiten Stababschnitte 3, 6 während eines etwaigen Transfers, Einfügevorgangs in einen Rotor oder Stator und dergleichen nicht mehr verändert wird. Dem Fachmann sind unterschiedliche Ausführungsformen für derartige Greifelemente 15 bekannt, wobei für die gegenständliche Erfindung die Verwendung von kulissengeführten, und segmentierten Greifelementen 15 als besonders vorteilhaft ist

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Leiterelement | 31 | Nutenring |
| 2 | Haltevorrichtung | 32 | Nutenringumfang |
| 3 | erster Stababschnitt | 33 | Halterungsnut |
| 4 | erstes Leiterende | 34 | Vorpositioniervorrichtung |
| 5 | erste Stablängsachse | 35 | Hebelführungsvorrichtung |
| 6 | zweiter Stababschnitt | 36 | Hebellänge |
| 7 | zweites Leiterende | 37 | erster Hebelarm |
| 8 | Verbindungsabschnitt | 38 | erste Stababschnittaufnahme |
| 9 | Stababschnittspaar | 39 | zweiter Hebelarm |
| 10 | Aufnahmen | 40 | zweite Stababschnittaufnahme |
| 11 | Aufnahmenut | 41 | erste Stababschnittsaufnahmeachse |
| 12 | Positioniervorrichtung | 42 | Innendurchmesser |
| 13 | Positionierelement | 43 | Hülseninnendurchmesser |
| 14 | Greifvorrichtung | 44 | Antriebsorgan |
| 15 | Greifelement | | |
| 16 | Außenumfang | | |
| 17 | Umfangsrichtung | | |
| 18 | Radialrichtung | | |
| 19 | Axialrichtung | | |
| 20 | Hebel | | |
| 21 | Führungsnut | | |
| 22 | Kulisse | | |
| 23 | Rollenelement | | |
| 24 | Hülse | | |
| 25 | Hülsenmantelfläche | | |
| 26 | oberer Endbereich | | |
| 27 | Positioniernut | | |
| 28 | Führungselement | | |
| 29 | Abstützvorrichtung | | |
| 30 | Abstützfläche | | |

## Patentansprüche

1. Verfahren zur Bildung eines zum Einfügen in einen Stator oder Rotor vorgesehenen Leiterpaketes, umfassend die Schritte
- Bereitstellen einer Mehrzahl von im Wesentlichen U-förmigen Leiterelementen (1) mit jeweils einem ersten Stababschnitt (3) und einem ersten Leiterende (4) und einem zweiten Stababschnitt (6) und einem zweiten Leiterende (7), welche Stababschnitte (3, 6) durch einen im Wesentlichen bogenförmigen Verbindungsabschnitt (8) verbunden sind,
- zumindest abschnittsweises Aufnehmen der ersten Stababschnitte (3) in Aufnahmen (10), welche Aufnahmen (10), an einem Außenumfang (16) einer inneren Haltevorrichtung (2) ausgebildet sind,
- Vorpositionieren der zweiten Stababschnitte (6) durch Verbringen eines jeweiligen zweiten Stababschnittes (6) in die Nähe eines ersten Stababschnittes (3) eines anderen Leiterelementes (1), mittels einer Positioniervorrichtung (12),
- und Greifen von jeweils aus einem vorpositionierten zweiten Stababschnitt (6) und einem in Radialrichtung (18) benachbarten, ersten Stababschnitt (3) gebildeten Stababschnittspaaren (9) durch in Radialrichtung (18) zur inneren Haltevorrichtung (2) geführte Greifelemente (15) zumindest einer umfänglich um die innere Haltevorrichtung (2) angeordneten Greifvorrichtung (14),
- wobei vor dem Vorpositionieren der zweiten Stababschnitte (6) die ersten Stababschnitte (3) zumindest abschnittsweise in den Aufnahmen (10) drehbar aufgenommen werden und die zweiten Stababschnitte (6) freistehend ringförmig um den Außenumfang (16) der inneren Haltevorrichtung (2) herum und in Radialrichtung (18) nach außen von dem Außenumfang (16) beabstandet angeordnet werden,
**dadurch gekennzeichnet,**
**dass**
die zweiten Stababschnitte (6) zum Vorpositionieren mittels eines in Umfangsrichtung (17), sowie gleichzeitig in Radialrichtung (18) zum Außenumfang (16) der inneren Haltevorrichtung (2), geführten Positionierelementes (13) der Positioniervorrichtung (12) gedrückt werden,
wobei die Leiterelemente (1) jeweils um eine erste Stablängsachse (5) der zumindest abschnittsweise in den Aufnahmen (10) drehbar aufgenommenen, ersten Stababschnitte (3) gedreht werden.

2. Verfahren nach Anspruch 1 **dadurch gekennzeichnet, dass** während des Bereitstellens, des Aufnehmens und des Vorpositionierens die Leiterelemente (1) durch jeweils einen Hebel (20), welcher um die erste Stablängsachse (5) der jeweils ersten Stababschnitte (3) drehbar ausgebildet ist, an dem ersten und zweiten Stababschnitt (3, 6) kontaktiert werden und die Hebel (20) während des Vorpositionierens die zweiten Stababschnitte (6) durch eine Einschwenkbewegung, analog der Andrückbewegung der zweiten Stababschnitte (6) durch das Positionierelement (13), in Umfangs- (17) und Radialrichtung (18) führen.

3. Verfahren nach einem der vorhergehenden Ansprüche, **dadurch gekennzeichnet, dass** das Positionierelement (13)durch ein rotierbar an der Positioniervorrichtung (12) angeordnetes Rollenelement (23) gebildet ist, und dass dieses Rollenelement (23) während des Vorpositionierens der zweiten Stababschnitte (6) an den zweiten Stababschnitten (6) abrollt oder aktiv angetrieben an den zweiten Stababschnitten (6) abgerollt wird.

4. Verfahren nach einem der vorhergehenden Ansprüche, **dadurch gekennzeichnet, dass** die Aufnahmen (10) für die ersten Stababschnitte (3) durch nach außen hin offene, in Axialrichtung (19) verlaufende Aufnahmenuten (11) gebildet sind, und dass die ersten Stababschnitte (3) zumindest abschnittsweise in diese Aufnahmenuten (11) aufgenommen werden, wobei während des Aufnehmens der ersten Stababschnitte (3) und während des Vorpositionierens der zweiten Stababschnitte (6) um die ersten Stababschnitte (3) zumindest abschnittsweise eine Hülse (24) angeordnet wird, welche Hülse (24) die ersten Stababschnitte (3) unmittelbar in Radialrichtung (18) nach außen benachbart umgibt und während des Vorpositionierens die ersten Stababschnitte (3) gegen Verschiebung in Radialrichtung (18) nach außen sichert, wobei die zweiten Stababschnitte (6) zum Vorpositionieren auf eine äußere Hülsenmantelfläche (25) der Hülse (24) angelegt werden.

5. Verfahren nach Anspruch 4, **dadurch gekennzeichnet, dass** nach dem Vorpositionieren der zweiten Stababschnitte (6) die Hülse (24) in Axialrichtung (19) bezüglich der inneren Haltevorrichtung (2) nach unten in einen Bereich der zweiten Leiterenden (7) der zweiten Stabsabschnitte (6) verstellt wird, und dass hiernach die zweiten Leiterenden (7) der vorpositionierten, zweiten Stababschnitte (6) mittels dem Positionierelement (13) oder den Greifelementen (15) der Greifvorrichtung (14) in umfänglich in einem oberen Endbereich (26) an der Hülse (24) angeordnete, nach oben offene Positioniernuten (27) gedrückt werden.

6. Verfahren nach einem Ansprüche 1 bis 5, **dadurch gekennzeichnet, dass** in einem Bereich der zweiten Leiterenden (7) der zweiten Stababschnitte (6) ein Führungselement (28) mit nach oben offenen Positioniernuten (27) angeordnet wird, und während des Greifvorgangs die zweiten Leiterenden (7) der vorpositionierten, zweiten Stababschnitte (6) mittels den Greifelementen (15) der Greifvorrichtung (14) in die Positioniernuten (27) gedrückt werden.

7. Verfahren nach einem der vorhergehenden Ansprüche, **dadurch gekennzeichnet, dass** die ersten Leiterenden (4) der ersten Stababschnitte (3) während des Vorpositionierens der Leiterelemente (1) mittels einer Abstützvorrichtung (29) mit zumindest einer Abstützfläche (30) in Axialrichtung (19) abgestützt werden.

8. Verfahren nach Anspruch 7, **dadurch gekennzeichnet, dass** während des Vorpositionierens der zweiten Stababschnitte (6) der erste Stababschnitt (3) zumindest eines der Leiterelemente (1) mittels wenigstens einer höhenverstellbaren Abstützfläche (30) der Abstützvorrichtung (29) in einer gegenüber anderen Leiterelementen (1) unterschiedlichen Höhe gelagert wird.

9. Verfahren nach einem der vorhergehenden Ansprüche, **dadurch gekennzeichnet, dass** im Bereich der ersten Leiterenden (4) der ersten Stababschnitte (3) ein Nutenring (31) angeordnet wird, an dessen Nutenringumfang (32) nach außen hin offene, vertikal verlaufende Halterungsnuten (33) angeordnet sind, und dass ersten Leiterenden (4) der ersten Stababschnitte (3) vor dem Vorpositionieren der zweiten Stababschnitte (6) in diese Halterungsnuten (33) eingebracht werden.

10. Vorpositioniervorrichtung (34) zur Bildung eines zum Einfügen in einen Stator oder Rotor vorgesehenen Leiterpaketes, umfassend
- eine innere Haltevorrichtung (2) mit entlang eines Außenumfangs (16) der inneren Haltevorrichtung (2) angeordneten und zur zumindest abschnittsweisen Aufnahme erster Stababschnitte (3) mit ersten Leiterenden (4) von im Wesentlichen U-förmigen Leiterelementen (1) vorgesehenen Aufnahmen (10),
- eine Positioniervorrichtung (12) zum Vorpositionieren von zweiten Stababschnitten (6) mit zweiten Leiterenden (7) der Leiterelemente (1), welche zweite Stababschnitte (6) mit den ersten Stababschnitten (3) durch einen im Wesentlichen bogenförmigen Verbindungsabschnitt (8) verbunden sind,
- zumindest eine um die innere Haltevorrichtung (2) in Umfangsrichtung (17) anordenbare Greifvorrichtung (14) mit in Radialrichtung (18) zur inneren Haltevorrichtung (2) verstellbaren Greifelementen (15), welche zum Greifen von jeweils aus einem vorpositionierten zweiten Stababschnitt (6) und einem benachbarten, ersten Stababschnitt (3) gebildeten Stababschnittspaaren (9) ausgebildet ist,
- wobei die Aufnahmen (10) derart dimensioniert sind, dass die ersten Stababschnitte (3) zumindest abschnittsweise in den Aufnahmen (10) drehbar aufnehmbar sind,
**dadurch gekennzeichnet,**
- **dass** die Positioniervorrichtung (12) zum Vorpositionieren der zweiten Stababschnitte (6) ein von der inneren Haltevorrichtung (2) in Radialrichtung (18) nach außen beabstandetes Positionierelement (13) umfasst,
welches Positionierelement (13) in Umfangsrichtung (17) der inneren Haltevorrichtung (2) umlaufend antreibbar und gleichzeitig radial nach innen verstellbar ausgebildet ist.

11. Vorpositioniervorrichtung (34) nach Anspruch 10 **dadurch gekennzeichnet, dass** eine Hebelführungsvorrichtung (35) mit einer, der Anzahl der Leiterelemente (1) entsprechenden, Anzahl an Hebeln (20) ausgebildet ist,
wobei die Hebel (20) bügelförmig mit einer vorbestimmbare Hebellänge (36) und zwei horizontal erstreckten, in die gleiche Richtung weisenden, Hebelarmen (37, 39) ausgebildet sind, wobei der erste Hebelarm (37) jeweils eine zum ersten Stababschnitt (3) des Leiterelements (1) formkompatible erste Stababschnittaufnahme (38) aufweist,
und wobei der zweite Hebelarm (39) jeweils eine zum zweiten Stababschnitt (6) des Leiterelements (1) formkompatible zweite Stababschnittaufnahme (40) aufweist,
und die Hebel (20) um eine jeweils eine erste Stababschnittsaufnahmeachse (41), welche mit einer ersten Stablängsachse (5) der jeweils ersten Stababschnitte (3) fluchtend, drehbar gelagert sind und wobei die Hebel (20) in Umfangsrichtung (17) verteilt
und in Axialrichtung (19) derart versetzt angeordnet sind, dass alle Hebel (20) in Umfangsrichtung (17) einschwenkbar sind.

12. Vorpositioniervorrichtung (34) nach den Ansprüchen 10 bis 11, **dadurch gekennzeichnet, dass** das Positionierelement (13) durch ein rotierbar an der Positioniervorrichtung (12) angeordnetes Rollenelement (23) gebildet ist, wobei dieses Rollenelement (23) antriebslos rotierbar gelagert ist oder mit einem Antriebsorgan (44) zur aktiv angetriebenen Rotation wirkverbunden ist.

13. Vorpositioniervorrichtung (34) nach einem der Ansprüche 10 bis 12, **dadurch gekennzeichnet, dass** die Aufnahmen (10) für die ersten Stababschnitte (3) durch nach außen hin offene, in Axialrichtung (19) verlaufende Aufnahmenuten (11) gebildet sind, und dass eine Hülse (24) ausgebildet ist, welche unterhalb der Aufnahmenuten (11) angeordnet ist, wobei ein Hülseninnendurchmesser (43) der Hülse (24) derart gewählt ist, dass die Hülse (24) für die ersten Stababschnitte (3) in Radialrichtung (18) nach außen eine Begrenzung bildet, wobei die Hülse (24) ausgebildet ist und in einem oberen Endbereich (26) in Umfangsrichtung (17) angeordnete, nach oben offene Positioniernuten (27) aufweist, welche Positioniernuten (27) zur Aufnahme der zweiten Leiterenden (7) der zweiten Stababschnitte (6) ausgebildet sind.

14. Vorpositioniervorrichtung (34) nach einem der Ansprüche 10 bis 12, **dadurch gekennzeichnet, dass** ein Führungselement (28) mit Positioniernuten (27) ausgebildet ist, welche Positioniernuten (27) zur Aufnahme der zweiten Leiterenden (7) der zweiten Stababschnitte (6) ausgebildet sind.

15. Vorpositioniervorrichtung (34) nach einem der Ansprüche 10 bis 14, **dadurch gekennzeichnet, dass** eine Abstützvorrichtung (29) mit zumindest einer Abstützfläche (30) ausgebildet ist, welche Abstützvorrichtung (29) zum axialen Abstützen der ersten Stababschnitte (3) vorgesehen ist.

16. Vorpositioniervorrichtung (34) nach Anspruch 15, **dadurch gekennzeichnet, dass** die Abstützvorrichtung (29) wenigstens eine höhenverstellbare Abstützfläche (30) aufweist.

17. Vorpositioniervorrichtung (34) nach einem der Ansprüche 10 bis 16, **dadurch gekennzeichnet, dass** ein Nutenring (31) ausgebildet ist, an dessen Nutenringumfang (32) nach außen hin offene, vertikal verlaufende Halterungsnuten (33) angeordnet sind, welche Halterungsnuten (33) zur zumindest abschnittsweisen Aufnahme der ersten Leiterenden (4) der ersten Stababschnitte (3) ausgebildet sind.

## Claims

1. A method for forming a conductor pack provided for inserting into a stator or rotor, comprising the steps
- providing a plurality of substantially U-shaped conductor elements (1), each having a first rod section (3) and a first conductor end (4) and a second rod section (6) and a second conductor end (7), which rod sections (3, 6) are connected by a substantially arc-shaped connection section (8),
- receiving, at least in sections, the first rod sections (3) in receptacles (10), which receptacles (10) are formed along an outer circumference (16) of an inner holding device (2),
- pre-positioning the second rod sections (6) by placing a respective second rod section (6) into the vicinity of a first rod section (3) of another conductor element (1) by means of a positioning device (12),
- and gripping rod section pairs (9), each formed from a pre-positioned second rod section (6) and a first rod section (3) adjacent in the radial direction (18), by means of gripping elements (15), which are guided in the radial direction (18) towards the inner holding device (2), of at least one gripping device (14) circumferentially arranged around the inner holding device (2)
- wherein prior to the pre-positioning of the second rod sections (6), the first rod sections (3) are rotatably received in the receptacles (10) at least in sections, and the second rod sections (6) are arranged annularly in a free-standing manner around the outer circumference (16) of the inner holding device (2) and spaced apart from the outer circumference (16) outwards in the radial direction (18),
**characterized in**
**that**
for pre-positioning, the second rod sections (6) are pushed by means of a positioning element (13) of the positioning device (12), said positioning element (13) being guided in the circumferential direction (17) and simultaneously in the radial direction (18) towards the outer circumference (16) of the inner holding device (2),
wherein the conductor elements (1) are each rotated around a first rod longitudinal axis (5) of the first rod sections (3), which are rotatably received in the receptacles (10) at least in sections.

2. The method according to claim 1, **characterized in that**, during providing, receiving and pre-positioning, the conductor elements (1) are each contacted at the first and the second rod sections (3, 6) by one lever (20), which is rotatably formed around the first rod longitudinal axis (5) of the respective first rod sections (3), and the levers (20), during pre-positioning, guide the second rod sections (6) in the circumferential (17) and radial directions (18) through an inward pivotal movement, by analogy with the pressing movement of the second rod sections (6) by the positioning element (13).

3. The method according to one of the preceding claims, **characterized in that** the positioning element (13) is formed by a roller element (23) rotatably arranged at the positioning device (12), and that said roller element (23), during pre-positioning of the second rod sections (6), rolls on the second rod sections (6) or is actively driven to roll on the second rod sections (6).

4. The method according to one of the preceding claims, **characterized in that** the receptacles (10) for the first rod sections (3) are formed by receiving grooves (11) which are open outwards and run in the axial direction (19), and that the first rod sections (3) are received in said receiving grooves (11) at least in sections, wherein, during receiving of the first rod sections (3) and during pre-positioning of the second rod sections (6), a sleeve (24) is arranged around the first rod sections (3) at least in sections, which sleeve (24) directly adjacently surrounds the first rod sections (3) outwards in the radial direction (18) and, during pre-positioning, secures the first rod sections (3) against being displaced outwards in the radial direction (18), wherein the second rod sections (6) are placed on an outer sleeve shell surface (25) of the sleeve (24) for pre-positioning.

5. The method according to claim 4, **characterized in that**, after pre-positioning of the second rod sections (6), the sleeve (24) is shifted in the axial direction (19) with respect to the inner holding device (2) downward into an area of the second conductor ends (7) of the second rod sections (6), and that afterwards, the second conductor ends (7) of the pre-positioned second rod sections (6) are pushed by means of the positioning element (13) or the gripping elements (15) of the gripping device (14) into positioning grooves (27) circumferentially arranged in an upper end area (26) at the sleeve (24) and open upwards.

6. The method according to one of claims 1 to 5, **characterized in that**, in an area of the second conductor ends (7) of the second rod sections (6), a guiding element (28) with positioning grooves (27), which are open upwards, is arranged, and, during the gripping process, the second conductor ends (7) of the pre-positioned second rod sections (6) are pushed into the positioning grooves (27) by means of the gripping elements (15) of the gripping device (14).

7. The method according to one of the preceding claims, **characterized in that**, during pre-positioning of the conductor elements (1), the first conductor ends (4) of the first rod sections (3) are supported in the axial direction (19) by means of a supporting device (29) having at least one supporting surface (30).

8. The method according to claim 7, **characterized in that**, during pre-positioning of the second rod sections (6), the first rod section (3) of at least one of the conductor elements (1) is mounted by means of at least one height-adjustable supporting surface (30) of the supporting device (29) in a height different from that of other conductor elements (1).

9. The method according to one of the preceding claims, **characterized in that** in the area of the first conductor ends (4) of the first rod sections (3), a groove ring (31) is arranged at whose groove ring circumference (32) securement grooves (33) are arranged, which are open outwards and extend vertically, and that first conductor ends (4) of the first rod sections (3) are introduced into said securement grooves (33) prior to pre-positioning of the second rod sections (6).

10. A pre-positioning device (34) for forming a conductor pack provided for inserting into a stator or rotor, comprising
- an inner holding device (2) with receptacles (10) arranged along an outer circumference (16) of the inner holding device (2) and provided for receiving, at least in sections, first rod sections (3) with first conductor ends (4) of substantially U-shaped conductor elements (1),
- a positioning device (12) for pre-positioning second rod sections (6) with second conductor ends (7) of the conductor elements (1), which second rod sections (6) are connected to the first rod sections (3) by a substantially arc-shaped connection section (8),
- at least one gripping device (14) arrangeable around the inner holding device (2) in the circumferential direction (17) with gripping elements (15) adjustable in the radial direction (18) towards the inner holding device (2), said gripping device (14) being designed for gripping rod section pairs (9), each formed from a pre-positioned second rod section (6) and an adjacent, first rod section (3),
wherein the receptacles (10) are dimensioned such that the first rod sections (3) are rotatably receivable in the receptions (10) at least in sections,
**characterized in that**
- the positioning device (12) for pre-positioning the second rod sections (6) comprises a positioning element (13) spaced apart from the inner holding device (2) outwards in the radial direction (18),
which positioning element (13) is circumferentially drivable in the circumferential direction (17) of the inner holding device (2) and simultaneously designed to be adjustable radially inwards.

11. The pre-positioning device (34) according to claim 10, **characterized in that** a lever guiding device (35) having a number of levers (20) corresponding to the number of conductor elements (1) is formed,
wherein the levers (20) are bow-shaped with a predeterminable lever length (36) and two lever arms (37, 39), which are horizontally extended and point in the same direction,
wherein the first lever arm (37) comprises one respective first rod section receptacle (38) having a shape compatible with the first rod section (3) of the conductor element (1), and wherein the second lever arm (39) comprises one respective second rod section receptacle (40) having a shape compatible with the second rod section (6) of the conductor element (1),
and the levers (20) are each rotatably mounted around a first rod section reception axis (41), which is aligned with a first rod longitudinal axis (5) of the respective first rod sections (3), and wherein the levers (20) are distributed in the circumferential direction (17)
and offset in the axial direction (19) such that all levers (20) are pivotable inwards in the circumferential direction (17).

12. The pre-positioning device (34) according to claims 10 to 11, **characterized in that** the positioning element (13) is formed by a roller element (23) rotatably arranged at the positioning device (12), wherein said roller element (23) is rotatably mounted without a drive or operatively connected to a drive member (44) for actively driven rotation.

13. The pre-positioning device (34) according to one of claims 10 to 12, **characterized in that** the receptacles (10) for the first rod sections (3) are formed by receiving grooves (11), which are open outwards and run in the axial direction (19), and that a sleeve (24) is formed, which is arranged below the receiving grooves (11), wherein an inner sleeve diameter (43) of the sleeve (24) is selected such that the sleeve (24) forms a limitation for the first rod sections (3) outwards in the radial direction (18), wherein the sleeve (24) is formed and comprises positioning grooves (27) arranged in an upper end area (26) in the circumferential direction (17) and open upwards, which positioning grooves (27) are designed for receiving the second conductor ends (7) of the second rod sections (6).

14. The pre-positioning device (34) according to one of claims 10 to 12, **characterized in that** a guiding element (28) with positioning grooves (27) is formed, which positioning grooves (27) are formed for receiving the second conductor ends (7) of the second rod sections (6).

15. The pre-positioning device (34) according to one of claims 10 to 14, **characterized in that** a supporting device (29) having at least one supporting surface (30) is formed, which supporting device (29) is provided for axially supporting the first rod sections (3).

16. The pre-positioning device (34) according to claim 15, **characterized in that** the supporting device (29) comprises at least one height-adjustable supporting surface (30).

17. The pre-positioning device (34) according to one of claims 10 to 16, **characterized in that** a groove ring (31) is formed, at whose groove ring circumference (32) securement grooves (33) are arranged, which are open outwards and extend vertically, which securement grooves (33) are designed for receiving, at least in sections, the first conductor ends (4) of the first rod sections (3).

## Revendications

1. Procédé de formation d'un ensemble de conducteurs destiné à être inséré dans un stator ou un rotor, comprenant les étapes suivantes :
- mise à disposition d'une pluralité d'éléments conducteurs (1) globalement en forme de U, avec chacun une première portion de barre (3) et une première extrémité de conducteur (4) et une deuxième portion de barre (6) et une deuxième extrémité de conducteur (7), ces portions de barres (3, 6) étant reliées par une portion de liaison (8) globalement en forme d'arc de cercle,
- logement, au moins à certains endroits, des premières portions de barres (3) dans des logements (10), ces logements (10) étant réalisés sur une circonférence externe (16) d'un dispositif de maintien interne (2),
- pré-positionnement des deuxièmes portions de barres (6) en amenant une deuxième portion de barre (6) respective à proximité d'une première portion de barre (3) d'un autre élément de conducteur (1), au moyen d'un dispositif de positionnement (12),
- et préhension de paires de portions de barre (9) constituées chacune d'une deuxième portion de barre (6) pré-positionnée et d'une première portion de barre (3) adjacente dans la direction radiale (18), par des éléments préhenseurs (15), guidés dans la direction radiale (18), vers le dispositif de maintien interne (2), d'au moins un autre dispositif de préhension (14) disposé sur la circonférence autour du dispositif de maintien interne (2),
- dans lequel, avant le pré-positionnement des deuxièmes portions de barres (6), les premières portions de barres (3) sont logées de manière rotative, au moins à certains endroits, dans les logements (10) et les deuxièmes portions de barres (6) sont disposées de manière distante, indépendante et annulaire autour de la circonférence externe (16) du dispositif de maintien interne (2) et dans la direction radiale (18) vers l'extérieur à partir de la circonférence externe (16),
**caractérisé en ce que**
les deuxièmes portions de barres (6) sont comprimées, pour le pré-positionnement, au moyen d'un d'un élément de positionnement (13) du dispositif de positionnement (12) guidé dans la direction circonférentielle (17) ainsi que simultanément dans la direction radiale (18) vers la circonférence externe (16) du dispositif de maintien interne (2), dans lequel les éléments conducteurs (1) sont mis en rotation chacun autour d'un premier axe longitudinal de barre (5) des premières portions de barres (3) logées de manière rotative au moins à certains endroits dans les logements (10).

2. Procédé selon la revendication 1, **caractérisé en ce que**, pendant la mise à disposition, le logement et le pré-positionnement, les éléments conducteurs (1) sont mis en contact chacun par un levier (20), qui est conçu de manière rotative autour du premier axe longitudinal de barre (5) de chacune des premières portions de barres (3), sur les première et deuxième portions de barres (3, 6) et les leviers (20) guident, pendant le pré-positionnement, les deuxièmes portions de barres (6), grâce à un mouvement de pivotement, de manière analogue au mouvement de compression des deuxièmes portions de barres (6) par l'élément de positionnement (13), dans les directions circonférentielle (17) et radiale (18).

3. Procédé selon l'une des revendications précédentes, **caractérisé en ce que** l'élément de positionnement (13) est constitué d'un élément de rouleau (23) disposé de manière rotative sur le dispositif de positionnement (12) et **en ce que** cet élément de rouleau (23) roule, pendant le pré-positionnement des deuxièmes portions de barres (6), sur les deuxièmes portions de barres (6), ou est roulé de manière entraînée activement sur les deuxièmes portions de barres (6).

4. Procédé selon l'une des revendications précédentes, **caractérisé en ce que** les logements (10) pour les premières portions de barres (3) sont constituées de rainures de logement (11) ouvertes vers l'extérieur et s'étendant dans la direction axiale (19), et **en ce que** les premières portions de barres (3) sont logées, au moins à certains endroits, dans ces rainures de logement (11), dans lequel, pendant le logement des premières portions de barres (3) et pendant le pré-positionnement ds deuxièmes portions de barres (6), un manchon (24) est disposé autour des premières portions de barres (3), au moins à certains endroits, ce manchon (24) entourant de manière adjacente vers l'extérieur les premières portions de barres (3) directement dans la direction radiale (18) et sécurisant, pendant le pré-positionnement, les premières portions de barres (3) contre un coulissement dans la direction radiale (18) vers l'extérieur, dans lequel les deuxièmes portions de barres (6) sont appuyés, pour le pré-positionnement, contre une surface d'enveloppe externe (25) du manchon (24).

5. Procédé selon la revendication 4, **caractérisé en ce que**, après le pré-positionnement des deuxièmes portions de barres (6), le manchon (24) est déplacé dans la direction axiale (19) par rapport au dispositif de maintien interne (2) vers le bas dans une zone des deuxièmes extrémités conductrices (7) des deuxièmes portions de barres (6), et **en ce que**, ensuite, les deuxièmes extrémités conductrices (7) des deuxièmes portions de barres (6) pré-positionnées sont comprimées, au moyen de l'élément de positionnement (13) ou des éléments préhenseurs (15) du dispositif de préhension (14) dans des rainures de positionnement (27) ouvertes vers le haut et disposées de manière circonférentielle dans une zone d'extrémité supérieure (26) sur le manchon (24).

6. Procédé selon l'une des revendications 1 à 5, **caractérisé en ce que**, dans une zone des deuxièmes extrémités conductrices (7) des deuxièmes portions de barres (6), est disposé un élément de guidage (28) avec des rainures de positionnement (27) ouvertes vers le haut et, pendant le processus de préhension, les deuxièmes extrémités conductrices (7) des deuxièmes portions de barres (6) prépositionnées sont comprimées dans les rainures de positionnement (27) au moyen des éléments préhenseurs (15) du dispositif de préhension (14).

7. Procédé selon l'une des revendications précédentes, **caractérisé en ce que** les premières extrémités conductrices (4) des premières portions de barres (3) sont appuyées, pendant le pré-positionnement des éléments conducteurs (1) au moyen d'un dispositif d'appui (29) avec au moins une surface d'appui (30) dans la direction axiale (19).

8. Procédé selon la revendication 7, **caractérisé en ce que**, pendant le pré-positionnement des deuxièmes portions de barres (6), la première portion de barre (3) d'au moins un des éléments conducteurs (1) est montée, au moyen d'au moins une surface d'appui (30), réglable en hauteur, du dispositif d'appui (29), à une hauteur différente par rapport à d'autres éléments conducteurs (1).

9. Procédé selon l'une des revendications précédentes, **caractérisé en ce que**, au niveau des premières extrémités conductrices (4) des premières portions de barres (3), est disposé une bague rainurée (31), sur la circonférence (32) de laquelle sont disposées des rainures de support (33) ouvertes vers l'extérieur et s'étendant verticalement, et **en ce que** les premières extrémités conductrices (4) des premières portions de barres (3) sont insérées dans ces rainures de support (33) avant le pré-positionnement des deuxièmes portions de barres (6).

10. Dispositif de pré-positionnement (34) pour la formation d'un ensemble de conducteurs destiné à être inséré dans un stator ou un rotor, comprenant
- un dispositif de maintien interne (2) avec des logements (10) disposés le long d'une circonférence externe (16) du dispositif de maintien interne (2) et conçus pour le logement, au moins à certains endroits, de premières portions de barres (3) avec des premières extrémités conductrices (4) d'éléments conducteurs (1) globalement en forme de U,
- un dispositif de positionnement (12) pour le pré-positionnement de deuxièmes portions de barres (6) avec des deuxièmes extrémités conductrices (7) des éléments conducteurs (1), ces deuxièmes portions de barres (6) étant reliées avec les premières portions de barres (3) par une portion de liaison (8) globalement en forme d'arc de cercle,
- au moins un dispositif de préhension (14), pouvant être disposé autour du dispositif de maintien interne (2) dans la direction circonférentielle (17), avec des éléments préhenseurs (15) pouvant être déplacés dans la direction radiale (18) vers le dispositif de maintien interne (2), qui est conçu pour la préhension de paires de portions de barres (9) constituées chacune d'une deuxième portion de barre (6) prépositionnée et d'une première portion de barre (3) adjacente,
- dans lequel les logements (10) sont dimensionnés de façon à ce que les premières portions de barres (3) peuvent être logés de manière rotative au moins à certains endroits dans les logements (10),
**caractérisé en ce que**
- le dispositif de positionnement (12) comprend, pour le pré-positionnement des deuxièmes portions de barres (6), un élément de positionnement (13) disposé à une certaine distance du dispositif de maintien interne (2) dans la direction radiale (18) vers l'extérieur,
cet élément de positionnement (13) étant conçu de façon à pouvoir être entraîné de manière circulaire dans la direction circonférentielle (17) du dispositif de maintien interne (2) et simultanément de manière mobile radialement vers l'intérieur.

11. Dispositif de pré-positionnement (34) selon la revendication 10, **caractérisé en ce qu'**un dispositif de guidage de levier (35) est réalisé avec un nombre de leviers (20) correspondant au nombre d'éléments conducteurs (1),
dans lequel les leviers (20) sont conçus en forme d'étriers avec une longueur de levier (36) prédéterminée et deux bras de levier (37, 39) s'étendant horizontalement et orientés dans la même direction, dans lequel le premier bras de levier (37) comprend respectivement un premier logement de portion de barre (38) d'une forme compatible avec la première portion de barre (3) de l'élément conducteur (1),
et dans lequel le deuxième bras de levier (39) comprend un deuxième logement de portion de barre (40) d'une forme compatible avec la deuxième portion de barre (6) de l'élément conducteur (1),
et les leviers (20) sont logés chacun de manière rotative autour d'un premier axe de logement de portion de barre (41), qui est aligné avec un premier axe longitudinal de barre (5) des premières portions de barres (3) respectives et dans lequel les leviers (20) sont répartis dans la direction circonférentielle (17) et sont disposés de manière décalée dans la direction axiale (19) de façon à ce que tous les leviers (20) puissent être pivotés dans la direction circonférentielle (17).

12. Dispositif de pré-positionnement (34) selon les revendications 10 à 11, **caractérisé en ce que** l'élément de positionnement (13) est constitué d'un élément de rouleau (23) disposé de manière rotative sur le dispositif de positionnement (12), dans lequel cet élément de rouleau (23) est logé de manière rotative sans entraînement ou est relié de manière fonctionnelle avec un organe d'entraînement (44) pour une rotation entraînée activement.

13. Dispositif de pré-positionnement (34) selon l'une des revendications 10 à 12, **caractérisé en ce que** les logements (10) pour les premières portions de barres (3) sont constitués de rainures de logements (11) ouvertes vers l'extérieur s'étendant dans la direction axiale (19) et **en ce qu'**un manchon (24) est réalisé, qui est disposé en dessous des rainures de logement (11), dans lequel un diamètre intérieur (43) du manchon (24) est choisi de façon à ce que le manchon (24) constitue, pour les premières portions de barres (3), dans la direction radiale (18) vers l'extérieur, une limitation, dans lequel le manchon (24) est conçu et comprend des rainures de positionnement (27) ouvertes vers le haut et disposées dans une zone d'extrémité supérieure (26) dans la direction circonférentielle (17), ces rainures de positionnement (27) étant conçues pour le logement des deuxièmes extrémités conductrices (7) des deuxièmes portions de barres (6).

14. Dispositif de pré-positionnement (34) selon l'une des revendications 10 à 12, **caractérisé en ce qu'**un élément de guidage (28) est réalisé avec des rainures de positionnement (27), ces rainures de positionnement (27) étant conçues pour le logement des deuxièmes extrémités conductrices (7) des deuxièmes portions de barres (6).

15. Dispositif de pré-positionnement (34) selon l'une des revendications 10 à 14, **caractérisé en ce qu'**un dispositif d'appui (29) avec au moins une surface d'appui (30) est prévu, ce dispositif d'appui (29) étant conçu pour l'appui axial des premières portions de barres (3).

16. Dispositif de pré-positionnement (34) selon la revendication 15, **caractérisé en ce que** le dispositif d'appui (29) comprend au moins une surface d'appui réglable en hauteur (30).

17. Dispositif de pré-positionnement (34) selon l'une des revendications 10 à 16, **caractérisé en ce qu'**une bague rainurée (31) est prévue, sur la surface (32) de laquelle sont disposées des rainures de support (33) ouvertes vers l'extérieur et s'étendant verticalement, ces rainures de support (33) étant conçues pour le logement, au moins à certains endroits, des premières extrémités conductrices (4) des premières portions de barres (3).
